# EUROPEAN PATENT APPLICATION

(11) **EP 4 806 687 A1**
(43) Date of publication of application: **16.09.2026**
(21) Application number: 26164282.1
(22) Date of filing: 12.03.2026
(51) Int. Cl.: B60K 6/387, B60K 6/485, B60K 6/44, B60K 6/448, B60W 10/06, B60W 10/08, B60W 20/15, B60W 20/16, B60W 20/40, B60W 30/192, B60K 6/26

(54) **START METHOD FOR STARTING AN INTERNAL COMBUSTION ENGINE IN A HYBRID MOTOR VEHICLE, WITH THERMIC AND ELECTRIC TRACTION**

(30) Priority: 14.03.2025 IT 202500005260
(71) Applicant: FERRARI S.p.A., 41100 Modena (IT)
(72) Inventor: RUSPAGGIARI, Mattia, 41100 MODENA (IT); BARONE, Alessandro, 41100 MODENA (IT); BETRO', Roberto, 41100 MODENA (IT); BLANDO, Giovanni, 41100 MODENA (IT); CORSETTI, Luigi, 41100 MODENA (IT); GENOVA, Daniele, 41100 MODENA (IT); LARAIA, Lorenzo, 41100 MODENA (IT); MAIONE, Gianluigi, 41100 MODENA (IT); MALINVERNO, Fabio, 41100 MODENA (IT); MASUCCI, Salvatore, 41100 MODENA (IT)
(74) Representative: Studio Torta S.p.A.

(57) **Abstract**

A hybrid motor vehicle (1) has a plurality of wheels (7,9), and an internal combustion engine (14), with a drive shaft (20) adapted to be mechanically connected to at least one of the wheels (9) by means of a clutch (18); at least one electric motor (13) is provided to supply driving torque to said wheel (9) via the clutch (18), in combination with or alternatively to the internal combustion engine (14); the electric motor (13) is mechanically connected, or adapted to be connected, to the drive shaft (20) when the clutch (18) is disengaged in such a way as to be used to start the internal combustion engine (14) via a procedure performed by an electronic command and control unit (25); said procedure includes the steps of: causing the rotation of the drive shaft (20) by means of the electric motor (13), until reaching a rotational speed (V) equal to a given value (L), and then maintaining this value (L) constant as rotational speed (V) for a given time (T), at the end of which fuel is injected into the internal combustion engine (14) in order to obtain an ignition (A).

## Description

### CROSS-REFERENCE TO RELATED APPLICATIONS.

This patent application claims priority from Italian patent application no. 102025000005260 filed on March 14, 2025, the entire disclosure of which is incorporated herein by reference.

### TECHNICAL FIELD

The present invention concerns a start method for starting an internal combustion engine, in particular a controlled ignition engine in a hybrid vehicle provided with an internal combustion engine and at least one electric motor for traction of the drive wheels.

In particular, the present invention refers to a motor vehicle having a control unit equipped with a control logic which implements said start method by using an electric traction motor which is mechanically connected (or adapted to be connected) to the drive shaft of the internal combustion engine.

### PRIOR ART

In the known solutions, in the context of internal combustion engines, starting is generally obtained by a dedicated electric motor, of relatively small size, operated in response to a start command (for example, the rotation of a key, pressing of a start button, etc....) to cause rotation of the drive shaft. During rotation of the drive shaft, the fuel is injected into the cylinders of the internal combustion engine. If the latter has controlled ignition, together with the fuel injection, the start command also causes the formation of sparks in the cylinders in such a way as to obtain ignition of the air-fuel mixture that forms inside them.

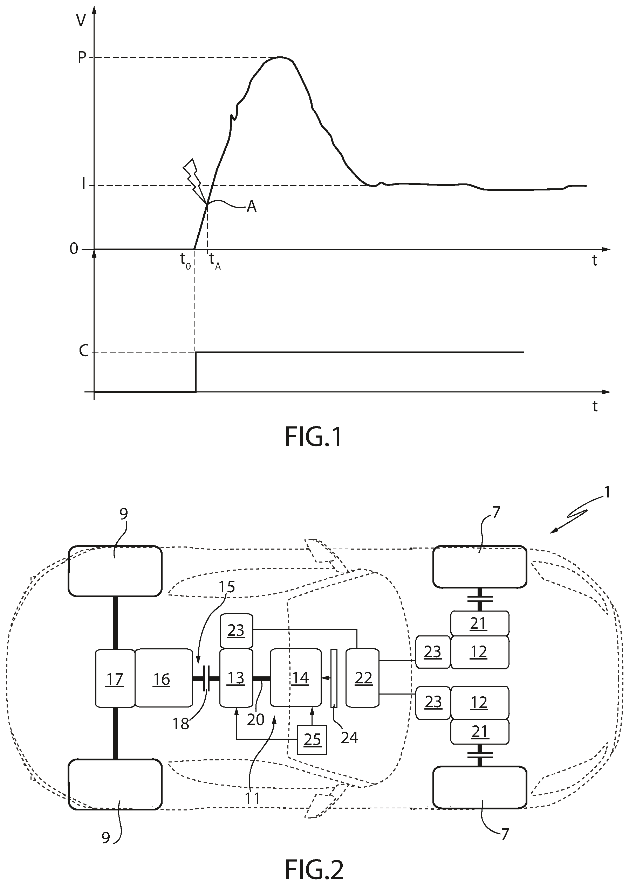

Figure 1 shows a schematic graph by way of example, which shows the trend of the rotational speed (V) of the drive shaft as a function of the time (t) during this standard start procedure, and in which the start command is indicated by the reference C and the ignition of the air-fuel mixture is indicated by point A.

The mixture in the cylinders is ignited at a time instant tA, after a time interval which is typically determined by the reaching of a given rotational speed of the drive shaft, for example a speed of approximately 300-400 r.p.m.

As can be noted in figure 1, at ignition A the rotational speed of the drive shaft increases relatively rapidly up to a value P, forming a sort of peak (also called overshoot), for example with speeds of approximately 1500-2000 r.p.m. The fuel supply is then controlled so that the rotational speed settles around a so-called "idle speed", indicated by the reference I, typically around 750 r.p.m., where the internal combustion engine is able to sustain itself (without loads).

Although it is a widely used start method, the need is felt to perfect it when the motor vehicle is hybrid, with thermic and electric propulsion, and has an electric traction motor mechanically connected (or adapted to be connected) to the drive shaft of the internal combustion engine.

In particular, the need is felt to achieve at least two objectives.

A first objective consists in reducing the polluting emissions in the exhaust gases at the outlet of the internal combustion engine during starting, particularly in the case of cold starting.

A second objective is to improve the acoustic sensation perceived by the driver during starting, particularly in the case of high-performance sports cars. In this regard, it is important to observe that, among the acoustic characteristics produced by the engine and perceived inside the passenger compartment, it is not so much the intensity of the sound that is important, but rather the "quality" of the sound (namely the sound produced by the engine and perceived inside the passenger compartment must not only be "loud", but also "pleasing"). In the context of this objective, the need is felt to make the sound perceived during starting as similar as possible to the one produced and perceived in racing vehicles which are started by external electric motor (the latter is temporarily coupled to the drive shaft of the internal combustion engine by means of an appropriate coupling, exclusively to perform the start function, and is decoupled and moved away from the vehicle after starting), for example in the Formula 1 championships of a few years ago.

The object of the present invention is therefore to meet the above needs, preferably in a simple and/or effective and/or inexpensive manner.

### SUMMARY OF THE INVENTION.

According to the present invention a motor vehicle is provided as defined in claim 1.

The dependent claims define particular embodiments of the invention, which shall be considered included in the following description.

### BRIEF DESCRIPTION OF THE DRAWINGS

Below, for a better understanding of the present invention, preferred embodiments will be described by way of non-limiting example, with reference to the attached drawings, in which:
- figure 1 is a graph relative to a starting procedure of an internal combustion engine according to the known art, as discussed above;
- figure 2 is a diagram by way of example, which shows partially and schematically a hybrid motor vehicle, with thermic and electric traction, in which the start method for starting an internal combustion engine according to the teachings of the present invention is implemented; and
- figure 3 is analogous to figure 1 and shows a graph relative to a preferred embodiment of the starting method according to the present invention.

### DETAILED DISCLOSURE OF PREFERRED EMBODIMENTS OF THE INVENTION.

In figure 2, the reference number 1 indicates, overall, a motor vehicle (partially and schematically illustrated) having a driving seat (not illustrated) configured in such a way as to accommodate a driver.

The motor vehicle 1 comprises two front wheels 7 and two rear wheels 9. In the specific example illustrated, all the wheels 7 and 9 are drive wheels.

The wheels 7 and 9 are operated by a propulsion system 11, comprising an internal combustion engine 14 and at least one electric traction motor. In the example illustrated, the propulsion system 11 comprises at least one electric traction motor 12 for driving the front wheels 7 and at least one electric traction motor 13 for driving the rear wheels 9. In particular, the propulsion system 11 comprises two motors 12, one for each wheel 7.

The internal combustion engine 14, in particular, is associated with the wheels 9, hence it operates as an alternative to, or in combination with, the motor 13 to provide driving torque to the wheels 9. In particular, the propulsion system 11 is configured in such a way that the driving torque delivered by the internal combustion engine 14 and the one delivered by the electric motor 13 can be added together, according to known techniques not described in detail. More specifically, the internal combustion engine 14 is a controlled ignition engine, for example a turbocharged petrol engine.

The internal combustion engine 14 and the motor 13 drive the wheels 9 (in combination with or alternatively to each other) via a transmission line 15 which comprises a gearbox 16, a differential 17 arranged between the gearbox 16 and the wheels 9, and a clutch 18, arranged between the gearbox 16 and the internal combustion engine 14.

The motor 13 is mechanically connected to a drive shaft 20 of the internal combustion engine 14, and is arranged in a fixed position on the motor vehicle 1 upstream of the clutch 18 or, at most, is integrated in said clutch 18. The couplings that mechanically connect the motor 13 to the clutch 18 and/or to the drive shaft 20 are of known type and not described here for the sake of brevity. For example, said couplings can be of permanent type, or be activatable and releasable according to the driving conditions, for example based on driving profiles that can be selected by the driver. For example, in the illustrated example, the motor 13 is mounted with an arrangement in series relative to the drive shaft 20 and the clutch 18; however, according to alternatives, not illustrated, the motor 13 can be connected to the clutch 18 with an arrangement in parallel relative to the drive shaft 20; or the drive shaft 20 can be directly connected to the clutch 18, and transfer torque from/to the motor 13 via a separate coupling.

In the particular illustrated example, moreover, the motors 12 drive the respective wheels 7, for example via a transmission 21 defining a fixed transmission ratio, and in a manner mechanically independent of the internal combustion engine 14 and the motor 13.

The motor vehicle 1 further comprises at least one so-called "high voltage" battery 22, of known type, connected to the electric motors 12 and 13 by electric/electronic components 23, of known type and not described in detail (for example with an inverter), in such a way as to exchange electrical energy in both directions. In this way, the electric motors 12 and 13 can be powered by the battery 22, and can also transfer a recharge current to the battery 22 when they function as alternators, for example during electric braking phases of the wheels 7,9.

Again with reference to the schematic simplified illustration of figure 1, the motor vehicle 1 comprises: a supply system 24 having a pump (not illustrated) which is driven by the drive shaft 20, in a manner known and not described in detail, to supply a liquid or gaseous fuel to fuel injectors associated with respective cylinders (not illustrated) of the internal combustion engine 14; and an electronic processing and control unit 25, configured by appropriate algorithms to regulate some functions of the propulsion system 11. For the purposes of the present invention, the unit 25 is configured in such a way as to manage the starting phases for starting the internal combustion engine 14 using the action of the motor 13.

In practice, the unit 25 can consist of a single electronic board, just as it can be defined by several electronic boards communicating with one another via a data communication network, for example a common CAN network provided on the motor vehicle 1.

The architecture described above for the motor vehicle 1 with reference to figure 2 has been provided by way of example, since the present invention can be applied to other types of hybrid motor vehicles, with thermic and electric traction; as mentioned above, it is important for the motor 13 to be arranged upstream of the clutch 18, or integrated with the latter, and for it to be mechanically coupled, or couplable, with the drive shaft 20 of the internal combustion engine 14. On the other hand, it is irrelevant whether the propulsion system 11 provides exclusively a rear drive, exclusively a front drive, or (as in the example illustrated) a four-wheel drive.

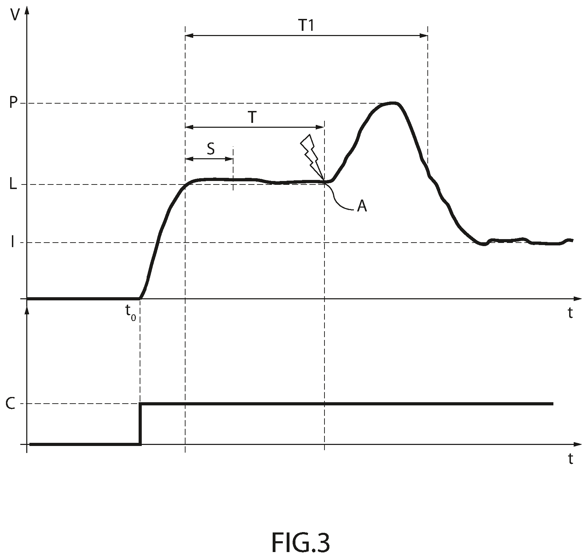

Figure 3 shows a graph relative to the starting procedure carried out according to an embodiment of the present invention, where the various quantities, the ignition phases, and the events during the ignition are indicated by the same reference letters explained above with reference to figure 1.

When the driver activates a starting command C (for example, by rotating a key or pressing a button, not illustrated), the motor 13 is started and used as starting motor to rotate the drive shaft 20, while the clutch 18 is disengaged. Unlike the standard procedure of figure 1, the rotation speed V of the drive shaft 20 increases as the rotation speed of the motor 13 increases, up to a value L which is maintained substantially constant for a time T, controlling the motor 13. This phase, in which the rotation speed V continues to correspond to the value L, terminates causing ignition A of the air-fuel mixture in the cylinders of the internal combustion engine 14 by injection of fuel through the injectors, and by simultaneous ignition of sparks in the cylinders if the internal combustion engine 14 is of the controlled ignition type.

Therefore, the starting procedure proposed in figure 3 can be divided into four steps (after an initial phase in which the motor 13 is activated to cause rotation of the drive shaft 20).
1) A preloading step, in which the drive shaft 20 is made to rotate by the motor 13 at the value L for a given time period T, without injection of fuel, as explained above and as will be detailed below; typically, the value L is between 1500 and 3500 r.p.m.
2) While the drive shaft rotates at the value L, at the end of the time T, the command is given for injection of fuel and, in the case of a controlled ignition engine, also ignition of the sparks.
3) This is followed by a step in which the rotational speed V increases relatively rapidly until it reaches a peak P, also called overshoot (as in the standard procedure of figure 1).
4) The procedure concludes by reaching and maintaining an idle speed I, for example equal to approximately 750 r.p.m., without yet applying loads to the internal combustion engine 14 (as in the standard procedure of figure 1).

In particular, the value L must be greater than a speed threshold sufficient to cause ignition of the air-fuel mixture at the moment when the fuel is injected into the cylinders and the sparks are ignited at the end of time T: in particular, said speed threshold is approximately equal to 400 r.p.m.

Preferably, the value L exceeds this speed threshold in such a way as to give the driver a strong acoustic sensation, corresponding to the fact that the drive shaft 20 of the internal combustion engine 14 in this step idles under the action of the motor 13, without injection of fuel and without connected loads.

Preferably, the value L is greater than the idle speed I.

More preferably, the value L is greater than or equal to 1500 r.p.m., as mentioned above, to allow the driver to clearly distinguish the perception of this acoustic sensation with respect to other operating conditions.

At the same time, the time T is greater than or equal to a threshold S such that the pressure of the fuel in the supply system 24, directly upstream of the injectors, has already reached a minimum nominal value, for example a pressure value at least equal to 200 bar. In this way, it can be observed by experimentation that the exhaust gases emitted by the internal combustion engine during starting contain a lower level of polluting agents (in particular, a lower level of unburned agents) compared to the standard procedure shown in figure 1, where the pressure of the fuel upstream of the injectors, in general, has not yet reached its nominal value when the ignition A occurs.

The threshold S can effectively vary based on the specific operating conditions (for example, based on the temperature) and the characteristics of the supply system 24 installed on the motor vehicle 1. By experimentation it can be observed that the pump of the supply system 24 can reach the minimum nominal pressure, with reasonable certainty, if the threshold S is given a value approximately equal to 3 tenths of a second (therefore: T>=0.3 seconds). Therefore, it is not strictly necessary to monitor the pressure of the fuel by means of sensors in order to establish the time T, when the motor 13 is controlled to obtain a substantially constant speed during this starting phase: the time T is preferably established during the design and set-up phases of the motor vehicle 1, and is stored on the same motor vehicle 1, for example in a memory forming part of the unit 25. The unit 25 reads the time T that has been stored, and applies it to the control of the motor 13 to maintain the rotational speed V constant, and to the control of the fuel injectors (and control of the spark ignition) to determine the time instant in which to cause the ignition A.

Preferably, the time T exceeds the threshold S for clearly distinguishing the acoustic perception due to the idle rotation of the internal combustion engine 14, with respect to other sounds typical of the internal combustion engine 14.

More preferably, the time T is greater than or equal to 0.5 seconds. Even more preferably, the time T is greater than or equal to 0.7 seconds.

In the graph of figure 3, the time interval T and the threshold S conventionally begin from the moment at which there is a substantial constancy in the value of the rotational speed of the drive shaft 20, but alternatively, equally conventionally, they could be made to begin at the time instant t0 when the command C is activated and the drive shaft 20 begins to rotate.

According to a preferred embodiment, at least one out of the time T and the value L is set in such a way as to be variable as a function of at least one of the following factors:
- setting, by the driver, of a particular driving profile, chosen from among a plurality of available driving profiles (for example a standard driving profile, a high-performance driving profile, a racing driving profile, etc....); in particular, the driving profile can be selected by the driver via a dedicated command (which is also called, in jargon, "Manettino") provided in the driver's seat; in this way, for example, it is possible to adapt the acoustic perception during starting based on the driving style which the driver wishes to apply after starting the motor vehicle 1;
- a quantity indicative of the temperature of the internal combustion engine 14, for example the temperature of the water in a cooling circuit (not illustrated) associated with said internal combustion engine 14.

According to a preferred embodiment, both the time T and the value L vary as a function of the driving profile selected from those available; more specifically, the time T and the value L both increase as the driving profile is associated with higher performances of the motor vehicle 1 (in terms of driving torque and, therefore, accelerations, for example with the same magnitude of acceleration command given by the driver).

According to a further embodiment, the starting logic described above (namely the presence of a phase in which the rotational speed is equal to a value L substantially constant for a given time T before injecting the fuel) is applied only if the temperature of the internal combustion engine 14 (or a quantity indicative of said temperature) is above a given threshold, namely above a minimum temperature (for example 7°C) defining a limit below which the start is defined as a "cold start"; below said temperature threshold, preferably, a standard starting procedure is applied, like the one shown in figure 1.

According to a preferred embodiment, a specific control strategy applied on the motor 13, corresponding to what is described in the European patent application with publication number EP 4112384 A1, the content of which is understood to be included herein in its entirety, is added to the starting procedure described above. In short, said control strategy comprises injecting, namely supplying, an electric current to the motor 13 in such a way as to obtain a desired sound in response to the electric current injected. This injection of electric current, dosed to obtain the desired sound, is carried out for a time T1 which terminates beyond the time T; preferably, the time T1 terminates also beyond the time necessary for reaching the peak P.

In general, the initial time instant T1, namely the time instant when this current injection begins, is linked to the resonance interval of the electric motor and the desired acoustic effect. In particular, the time T1 begins close to the time instant at which the value L starts at a substantially constant value.

From the above it is evident that the procedure proposed reduces the polluting emissions, in particular the emissions of unburned agents, in the exhaust gases produced by the internal combustion engine 14 during starting, particularly in the case of cold starting. At the same time, the proposed procedure improves the acoustic sensations of the driver during starting. In this regard, the acoustics achieved by the procedure described above are similar to those produced during the starting of racing cars with electric starter motor applied from the outside of the vehicle before the race begins..

The specific characteristics, indicated above as preferred embodiment examples, with regard to the entity of the time T and the value L are mainly intended to improve the acoustic sensation of the driver.

Lastly, it is evident that, with respect to these specific characteristics, modifications and variations can be made without departing from the protective scope defined by the attached claims..

In particular, the graph of figure 3 should be considered as a qualitative graph, hence the proportions between the various values shown in the graph are not essential.

## Claims

1. Start method for starting an internal combustion engine (14) in a hybrid motor vehicle (1), which comprises:
- a plurality of wheels (7, 9);
- at least one clutch (18);
- said internal combustion engine (14), which includes a drive shaft (20) able to be mechanically connected to at least one of said wheels (9) by said clutch (18);
- at least one electric motor (13), which is arranged so as to provide driving torque to said wheel (9) via said clutch (18), in combination with, or as an alternative to, said internal combustion engine (14), and is mechanically connected, or able to be connected, to said drive shaft (20) when said clutch (18) is disengaged;
- an electronic command and control unit (25) configured to control said internal combustion engine (14) and said electric motor (13) to perform the start method;
the start method comprising the steps of:
- bringing said drive shaft (20) in rotation by said electric motor (13), until a rotational speed (V) equal to a given value (L) is reached, without injecting fuel into said internal combustion engine (14);
- controlling said electric motor (13) so as to maintain said rotational speed (V) substantially constant at said value (L) for a given time (T), without injecting fuel;
- injecting fuel into said internal combustion engine (14) at the end of said time (T), so as to achieve an ignition (A) of an air-fuel mixture in said internal combustion engine (14);
- reaching a peak (P) of said rotational speed (V), in response to said ignition (A);
- after said peak (P), reducing said rotational speed (V) to an idle speed (I).

2. The start method according to claim 1, wherein said value (L) is greater than or equal to 400 revolutions per minute.

3. The start method according to claim 1 or 2, wherein said value (L) is greater than said idle speed (I).

4. The start method according to any of the preceding claims, wherein said value (L) is greater than or equal to 1500 revolutions per minute.

5. The start method according to claim 4, wherein said value (L) is less than or equal to 3500 revolutions per minute.

6. The start method according to any of the preceding claims, wherein said time (T) is greater than or equal to 0.3 seconds.

7. The start method according to claim 6, wherein said time (T) is greater than or equal to 0.7 seconds.

8. The start method according to any of the preceding claims, wherein at least one of said value (L) and said time (T) is variable as a function of at least one of the following factors:
- a setting or selection, carried out by a driver of the motor vehicle (1), of a driving profile, from a number of available driving profiles;
- a quantity indicative of the temperature of the internal combustion engine (14).

9. The start method according to any of the preceding claims, wherein said motor vehicle (1) includes a memory; and wherein said value (L) and said time (T) are stored in said memory and are read by said electronic control and command unit (25) to control said internal combustion engine (14) and said electric motor (13).

10. The start method according to any of the preceding claims, and comprising the further steps of:
- monitoring a quantity indicative of the temperature of said internal combustion engine (14);
- reaching and maintaining said value (L), as rotational speed (V), if said quantity is higher than a given threshold, indicative of a cold start;
- applying a different start mode if said quantity is lower than said threshold.
